# EUROPÄISCHE PATENTANMELDUNG

(11) **EP 1 486 110 A1**
(43) Veröffentlichungstag der Anmeldung: **15.12.2004**
(21) Anmeldenummer: 04102573.5
(22) Anmeldetag: 08.06.2004
(51) Int. Cl.: A01D 43/08, A01D 75/30

(54) **Erntemaschine**

(30) Priorität: 12.06.2003 DE 10326367
(71) Anmelder: DEERE & COMPANY, Moline, Illinois 61265-8098 (US)
(72) Erfinder: Kormann, Georg, 66424, Homburg (DE)
(74) Vertreter: Holst, Sönke, Dr.

(57) **Zusammenfassung**

Die Erfindung bezieht sich auf eine Erntemaschine (10), mit einer an der Vorderseite der Erntemaschine (10) angebrachten ersten Erntegutaufnahmeeinrichtung (28) und einer innerhalb der Erntemaschine (10) angeordneten ersten Erntegutbearbeitungseinrichtung (32), der von der ersten Erntegutaufnahmeeinrichtung (28) geerntetes Gut zuführbar ist.

Es wird vorgeschlagen, dass eine zweite Erntegutaufnahmeeinrichtung (40) vorgesehen ist, die von der ersten Erntegutaufnahmeeinrichtung (28) räumlich getrennt und ihr gegenüber seitlich und in Fahrtrichtung nach hinten versetzt angeordnet ist, und dass einer innerhalb der Erntemaschine (10) angeordneten Erntegutbearbeitungseinrichtung (46) von der zweiten Erntegutaufnahmeeinrichtung (40) geerntetes Gut zuführbar ist.

## Beschreibung

Die Erfindung betrifft eine Erntemaschine mit einer an der Vorderseite der Erntemaschine angebrachten ersten Erntegutaufnahmeeinrichtung und einer innerhalb der Erntemaschine angeordneten ersten Erntegutbearbeitungseinrichtung, der von der ersten Erntegutaufnahmeeinrichtung geerntetes Gut zuführbar ist.

Im Stand der Technik sind Feldhäcksler mit einer einzigen Messertrommel und einem einzigen Einzugskanal ausgestattet, der Erntegut der Messertrommel zuführt. Bei den bekannten Feldhäckslern kommt es aufgrund von gesetzlichen Einschränkungen der Bauhöhe und der Baubreite zu Grenzen der möglichen Durchsatzleistung. Außerdem führt die herkömmliche Bauform der Feldhäcksler zu einer Verschiebung des Massenschwerpunkts in den vorderen Bereich der Maschine, was das Fahrverhalten insbesondere bei höheren Geschwindigkeiten verschlechtert.

In der EP 1 277 395 A wird vorgeschlagen, zur Leistungssteigerung von Feldhäckslern den aufgenommenen Erntegutstrom in zwei Teilströme aufzuteilen und einer oder mehreren Häckseltrommeln zuzuführen. Durch diese Maßnahme wird zwar ein Engpass im Einzugskanal beseitigt, doch bleibt das Problem der Kopflastigkeit der Maschine erhalten.

Das der Erfindung zu Grunde liegende Problem wird darin gesehen, eine Erntemaschine, insbesondere einen Feldhäcksler, bereitzustellen, die einen hohen Gutdurchsatz ermöglicht und ein verbessertes Fahrverhalten aufweist bei gleichbleibend guter Bearbeitungsqualität.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die selbstfahrende Erntemaschine weist in an sich bekannter Weise eine erste Erntegutaufnahmeeinrichtung auf, die Erntgut vom Feld aufnimmt oder aberntet. Das Erntegut wird einer Erntegutbearbeitungseinrichtung zugeführt, die sich innerhalb der Erntemaschine befindet. Es wird vorgeschlagen, an der Erntemaschine eine zweite Erntegutaufnahmeeinrichtung anzubringen, die gegenüber der ersten Erntegutaufnahmeeinrichtung seitlich nach außen und in der Fahrtrichtung nach hinten versetzt ist. Eine zweite Gutfördereinheit übernimmt das von der zweiten Erntegutaufnahmevorrichtung aufgenommene bzw. abgeerntete Gut und führt es einer Erntegutbearbeitungseinrichtung innerhalb der Erntemaschine zu. In der Regel sind an beiden Seiten der Erntemaschine zweite Erntegutaufnahmeeinrichtungen vorgesehen.

Auf diese Weise erreicht man, dass einige Elemente der Erntemaschine weiter in Fahrtrichtung nach hinten versetzt sind. Dadurch ergibt sich eine gleichmäßigere Gewichtsverteilung und ein weiter hinten liegender Schwerpunkt, was das Fahrverhalten entscheidend verbessert. Außerdem können größere Arbeitsbreiten realisiert werden.

Es wäre denkbar, nur eine einzige Erntegutbearbeitungseinrichtung vorzusehen, der das Erntegut von beiden Erntegutaufnahmeeinrichtungen zugeführt wird. Vorzugsweise ist aber eine zweite Erntegutbearbeitungseinrichtung vorhanden, der das von der zweiten Erntegutaufnahmeeinrichtung aufgenommene Gut zugeführt wird. Dadurch erreicht man eine Entlastung der ersten Erntegutbearbeitungseinrichtung und eine weitere Verlagerung des Massenschwerpunkts der Erntemaschine nach hinten. Es bietet sich an, eine Austrageinrichtung für das bearbeitete Gut vorzusehen, die von den beiden Erntegutbearbeitungseinrichtungen gemeinsam genutzt wird.

Obwohl die beiden Erntegutaufnahmeeinrichtungen und die Erntegutbearbeitungseinrichtung(en) an einem in sich starren Fahrgestell mit lenkbaren Hinterrädern angebracht werden können, wie im Stand der Technik gebräuchlich, findet in einer bevorzugten Ausführungsform der Erfindung ein Fahrgestell in Form eines an sich bekannten Knicklenkers Verwendung. Die erste Erntegutaufnahmeeinrichtung und Erntegutbearbeitungseinrichtung sind auf einem ersten (vorderen) Fahrgestellteil angebracht, der um die Hochachse schwenkbar mit einem zweiten (hinteren) Fahrgestellteil verbunden ist, welcher wiederum die zweite Erntegutaufnahmeeinrichtung und Erntegutbearbeitungseinrichtung trägt. Die beiden Fahrgestellteile sind jeweils mit Rädern oder Gleisketten (Raupenlaufwerken) ausgestattet, von denen zumindest ein Teil antreibbar sind. Zum Lenken werden die beiden Fahrgestellteile gegeneinander verschwenkt.

Die Erfindung eignet sich für beliebige Erntemaschinen mit Erntegutbearbeitungseinrichtungen, beispielsweise für Mähdrescher, Ballenpressen, Baumwollernter und Feldhäcksler.

In den Zeichnungen ist ein nachfolgend näher beschriebenes Ausführungsbeispiel der Erfindung dargestellt. Es zeigt:
- Fig. 1: eine schematische Seitenansicht einer erfindungsgemäßen Erntemaschine in Form eines Feldhäckslers und
- Fig. 2: eine schematische Draufsicht auf die Erntemaschine aus Figur 1.

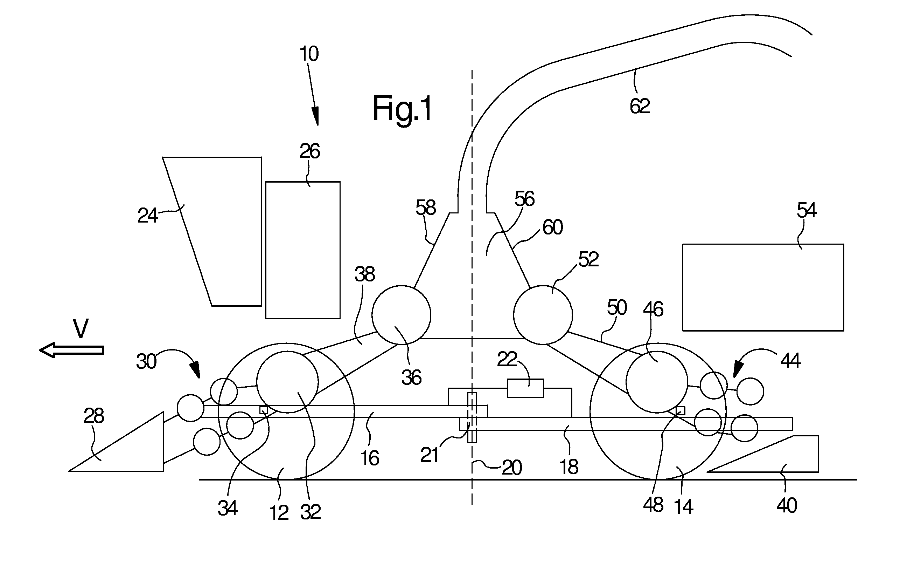

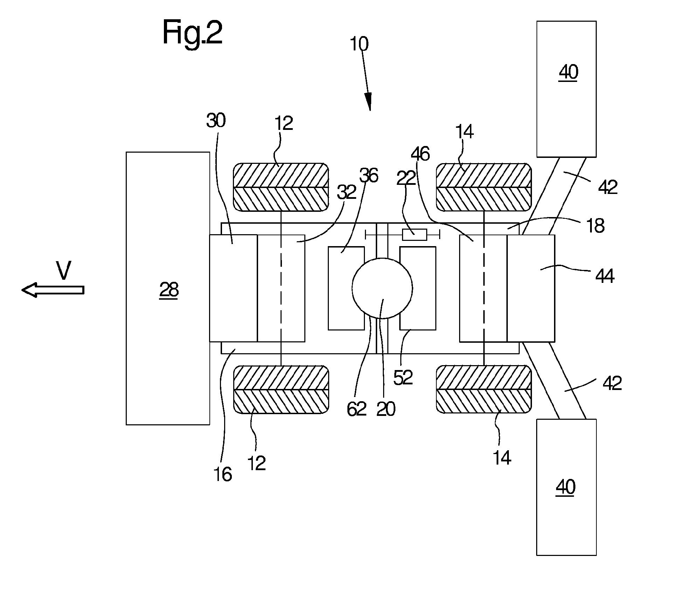

In den Figuren 1 und 2 ist eine Erntemaschine 10 in Form eines Feldhäckslers schematisch dargestellt. Die Erntemaschine 10 weist ein Paar vorderer Räder 12 und ein Paar hinterer Räder 14 auf, die auf dem Erdboden abrollen. Die vorderen Räder 12 sind starr oder federnd, jedoch nicht lenkbar, an einem ersten Fahrgestellteil 16 angebracht, während die hinteren Räder 14 ebenfalls starr oder federnd, aber nicht lenkbar, an einem zweiten Fahrgestellteil 18 angebracht sind. Der erste Fahrgestellteil 16 ist durch eine Schwenklagerung 21 um eine vertikal verlaufende Achse 20 mit dem zweiten Fahrgestellteil 18 schwenkbar verbunden. Zum Lenken ist mindestens ein doppelt wirkender Hydraulikzylinder 22 (oder zwei einfach wirkende Hydraulikzylinder) im Abstand von der Achse 20 zwischen dem ersten Fahrgestellteil 16 und zweiten Fahrgestellteil 18 angeordnet. Die Erntemaschine 10 ist somit in der Art eines Knicklenkers aufgebaut.

Am ersten Fahrgestellteil 16 ist frontseitig eine Kabine 24 mit Bedienungselementen für einen Bediener vorgesehen. In Fahrtrichtung hinter der Kabine 24 ist ein Kraftstofftank 26 angebracht. Am in Fahrtrichtung V, die sich in den Figuren von rechts nach links erstreckt, vorderen Ende des ersten Fahrgestellteils 16 ist mittig eine erste Erntegutaufnahmeeinrichtung 28 abnehmbar (und/oder in eine Transportstellung einklappbar) angebracht. Die erste Erntegutaufnahmeeinrichtung 28 kann höhenverstellbar bzw. schwenkbar am ersten Fahrgestellteil 16 angelenkt und mit definierbarer Auflagekraft versehen sein. Bei der ersten Erntegutaufnahmeeinrichtung 28 kann es sich beispielsweise um ein Maisgebiss, eine Pick-Up oder um ein Schneidwerk handeln. Das von der ersten Erntegutaufnahmevorrichtung 28 aufgenommene Gut, z. B. Mais oder Gras, wird durch eine erste Gutfördereinheit 30 in Form von Vorpresswalzen einer ersten Erntegutbearbeitungseinheit 32 in Form einer Häckseltrommel zugeführt. Letztere zerkleinert das Gut im Zusammenwirken mit einer Gegenschneide 34 und führt es über einen ersten Kanal 38 einem ersten Gebläse 36 zu. In den ersten Kanal 38 zwischen der ersten Erntegutbearbeitungseinheit 32 und dem ersten Gebläse 36 kann ein Körnerprozessor (nicht dargestellt) eingefügt werden, um die im Gut enthaltenen Körner anzuquetschen. Die erste Gutfördereinheit 30, die erste Erntegutbearbeitungseinrichtung 32, der erste Kanal 38 und das erste Gebläse 36 sind am ersten Fahrgestellteil 16 befestigt.

Am in Fahrtrichtung V rückwärtigen Ende des zweiten Fahrgestellteils 18 ist an beiden Seiten der Erntemaschine 10 jeweils eine zweite Erntegutaufnahmeeinrichtung 40 angebracht, deren Aufbau mit der ersten Erntegutaufnahmeeinrichtung 28 grundsätzlich übereinstimmt. Die zweiten Erntegutaufnahmeeinrichtungen 40 fördern das geerntete Gut jedoch jeweils nach innen. Die zweiten Erntegutaufnahmeeinrichtungen 40 können zum Transport auf einer Straße in eine angehobene Transportstellung verschwenkt werden. Durch Förderkanäle 42 wird das von den zweiten Erntegutaufnahmeeinrichtungen 40 aufgenommene Gut weiter nach innen gefördert und einer zweiten Gutfördereinheit 44 in Form von Vorpresswalzen zugeführt, die es wiederum nach vorn fördert und einer zweiten Erntegutbearbeitungseinrichtung 46 in Form einer Häckseltrommel aufgibt. Die zweite Erntegutbearbeitungseinrichtung 46 zerkleinert das Gut im Zusammenwirken mit einer Gegenschneide 48 und führt es über einen zweiten Kanal 50 einem zweiten Gebläse 52 zu. In den zweiten Kanal 38 kann ebenfalls ein Körnerprozessor (nicht dargestellt) eingefügt werden, um die im Gut enthaltenen Körner anzuquetschen. Die erste zweite Gutfördereinheit 44, die zweite Erntegutbearbeitungseinrichtung 46, der zweite Kanal 50 und das zweite Gebläse 52 sind am zweiten Fahrgestellteil 18 befestigt.

Der zweite Fahrgestellteil 18 trägt weiterhin einen Verbrennungsmotor 54, der die angetriebenen Elemente der Erntemaschine 10 mit mechanischer oder elektrischer Antriebsenergie versorgt. Die Elemente des ersten Fahrgestellteils 16 können vom Verbrennungsmotor 54 her über eine Gelenkwelle und/oder andere bewegliche Mittel, z. B. Hydraulikleitungen, angetrieben werden. Das Antriebssystem kann auch einen Verbrennungsmotor, einen Generator und Elektromotoren zum Antrieb der Förder- und/oder Gutbearbeitungselemente umfassen.

Oberhalb der Schwenklagerung 21 ist ein trichterförmiger Schacht 56 angeordnet, in den die Gebläse 36, 52 das ihnen zugeführte Gut etwa vertikal nach oben einblasen oder werfen. Der Schacht 56 weist eine vordere Wand 58 auf, die mit dem ersten Fahrgestellteil 16 verbunden ist und eine hintere Wand 60, die mit dem hinteren Fahrgestellteil 18 verbunden ist. Die Wände 58, 60 sind aneinander drehbar, beispielsweise aneinander gleitend verschiebbar oder durch eine harmonikaartige Verbindung gelagert, um die durch die Lenkbewegung des Hydraulikzylinders 22 bewirkte relative Schwenkbewegung der Fahrgestellteile 16, 18 aufnehmen zu können. An der Oberseite des Schachts 56 ist eine Austrageinrichtung 62 angebracht, durch die das gehäckselte Gut auf einen Anhänger oder ein beliebiges anderes Fahrzeug überladen werden kann. Die Position der Austrageinrichtung 62 (Höhe des Endes, Drehwinkel um die Achse 20 und Position einer am Ende angeordneten Auswurfklappe) ist mittels geeigneter Antriebe durch den Bediener oder selbsttätig verstellbar. Die Austrageinrichtung 62 ist somit um die Achse 20 drehbar.

Im Ergebnis erhält man eine Erntemaschine 10 mit einer großen Arbeitsbreite, mit der ein hoher Durchsatz bei guter Schnittqualität erzielbar ist. Der Massenschwerpunkt liegt etwa in der Mitte der Erntemaschine.

## Patentansprüche

1. Erntemaschine (10), mit einer an der Vorderseite der Erntemaschine (10) angebrachten ersten Erntegutaufnahmeeinrichtung (28) und einer innerhalb der Erntemaschine (10) angeordneten ersten Erntegutbearbeitungseinrichtung (32), der von der ersten Erntegutaufnahmeeinrichtung (28) geerntetes Gut zuführbar ist, **dadurch gekennzeichnet, dass** eine zweite Erntegutaufnahmeeinrichtung (40) vorgesehen ist, die von der ersten Erntegutaufnahmeeinrichtung (28) räumlich getrennt und ihr gegenüber seitlich und in Fahrtrichtung nach hinten versetzt angeordnet ist, und dass einer innerhalb der Erntemaschine (10) angeordneten Erntegutbearbeitungseinrichtung (46) von der zweiten Erntegutaufnahmeeinrichtung (40) geerntetes Gut zuführbar ist.

2. Erntemaschine (10) nach Anspruch 1, **dadurch gekennzeichnet, dass** an beiden Seiten der Erntemaschine (10) jeweils eine zweite Erntegutaufnahmeeinrichtung (40) vorhanden ist.

3. Erntemaschine (10) nach Anspruch 1 oder 2, **dadurch gekennzeichnet, dass** eine zweite Erntegutbearbeitungseinrichtung (46) vorhanden ist, und dass das von der zweiten Erntegutaufnahmeeinrichtung (40) geerntete Gut der zweiten Erntegutbearbeitungseinrichtung (46) zuführbar ist.

4. Erntemaschine (10) nach Anspruch 3, **dadurch gekennzeichnet, dass** die erste Erntegutbearbeitungseinrichtung (32) und die zweite Erntegutbearbeitungseinrichtung (46) betreibbar sind, das bearbeitete Gut einer gemeinsamen Austrageinrichtung (62) zuzuführen.

5. Erntemaschine (10) nach Anspruch 3 oder 4, **dadurch gekennzeichnet, dass** die zweite Erntegutaufnahmeeinrichtung (40) und die zweite Erntegutbearbeitungseinrichtung (46) an einem zweiten Fahrgestellteil (18) montiert sind, das gegenüber einem ersten Fahrgestellteil (16), an dem die erste Erntegutaufnahmeinrichtung (28) und die erste Erntegutbearbeitungseinrichtung (32) angebracht sind, um die Hochachse (20) schwenkbar gelagert ist.

6. Erntemaschine (10) nach Anspruch 5, **dadurch gekennzeichnet, dass** das erste Fahrgestellteil (16) und das zweite Fahrgestellteil (18) jeweils mit auf dem Erdboden abrollenden Rädern (12, 14) oder Gleisketten ausgestattet sind, und dass das erste Fahrgestellteil (16) gegenüber dem zweiten Fahrgestellteil (18) durch eine Lenkeinrichtung um die Hochachse (20) schwenkbar ist.

7. Erntemaschine (10) nach einem der vorhergehenden Ansprüche, **dadurch gekennzeichnet, dass** die Erntegutbearbeitungseinrichtung eine Häckseleinrichtung ist.
